# EUROPEAN PATENT APPLICATION

(11) **EP 4 741 845 A1**
(43) Date of publication of application: **13.05.2026**
(21) Application number: 24211650.7
(22) Date of filing: 08.11.2024
(51) Int. Cl.: G01R 31/317, G01R 31/3181, G06F 21/55

(54) **VOLTAGE GLITCH DETECTION**

(71) Applicant: NXP B.V., 5656 AG Eindhoven (NL)
(72) Inventor: LEE, Hyunsung, 5656 AG Eindhoven (NL)
(74) Representative: Hardingham, Christopher Mark

(57) **Abstract**

The disclosure relates to a supply voltage glitch detection circuit (300) comprising: a first flip-flop (301) having a data input (302), a clock input (303) and an output (304); a delay circuit (305) having an output (307) connected to the data input of the first flip-flop; a first clock signal divider (308) having a clock input (309) connected to receive an inverted clock signal and an output (312) connected to an input (306) of the delay circuit (305); a second clock signal divider (313) having a clock input (314) connected to receive the clock signal and an output (315) connected to the clock input (303) of the first flip-flop, wherein the circuit (300) is configured to cause a glitch detection signal output to change state upon a supply voltage of the circuit (300) deviating to cause a change in a delay provided by the delay circuit (305).

## Description

### Field

The disclosure relates to circuits and methods for detection of voltage glitches.

### Background

Voltage glitches in digital circuits, being temporary increases or decreases in a supply voltage, can be used to extract information from otherwise secure circuits. Intentionally introducing a voltage glitch can inject a fault into a circuit, which can be used to cause the circuit to output sensitive information, for example an internally stored encryption or decryption key. Detecting and/or mitigating the effect of such attacks is therefore an important feature for designing more resilient secure circuits.

### Summary

According to a first aspect there is provided a supply voltage glitch detection circuit comprising: a first flip-flop having a data input, a clock input and an output for providing a glitch detection signal; a delay circuit having an input and an output connected to the data input of the first flip-flop; a first clock signal divider having a clock input connected to receive an inverted clock signal and an output connected to the input of the delay circuit; a second clock signal divider having a clock input connected to receive the clock signal and an output connected to the clock input of the first flip-flop, wherein the voltage glitch detection circuit is configured to cause the glitch detection signal to change state upon a supply voltage of the circuit deviating to cause a change in a delay provided by the delay circuit.

In some examples, the first clock signal divider comprises a second flip-flop having a data input and an inverted output, the data input connected to the inverted output; and the second clock signal divider comprises a third flip-flop having a data input and an inverted output, the data input connected to the inverted output.

In some examples, the supply voltage glitch detection circuit comprises an inverter connected between the clock input of the first clock signal divider and a clock signal line, wherein the clock input of the second clock signal divider is connected to the clock signal line. In alternative examples, the supply voltage glitch detection circuit comprises an inverter connected between the clock input of the second clock signal divider and a clock signal line, wherein the clock input of the first clock signal divider is connected to the clock signal line.

In some examples, the output of the first clock signal divider is connected directly to the input of the delay circuit.

In some examples, the supply voltage glitch detection circuit further comprises a logic AND gate having a first input connected to the output of the second flip-flop, a second input connected to the inverted output and data input of the third flip-flop and an output connected to the input of the delay circuit.

In some examples, the clock signal is a divided clock signal, the detector circuit further comprising: a third clock signal divider having a clock input connected to receive an inverted clock signal and an output connected to the clock input of the first clock signal divider for providing the inverted divided clock signal to the first clock signal divider; and a fourth clock signal divider having a clock input connected to receive the clock signal and an output connected to the clock input of the second clock signal divider for providing the divided clock signal to the second clock signal divider.

In some examples, the third clock signal divider comprises a fourth flip-flop having a data input and an inverted output, the data input connected to the inverted output, and the fourth clock signal divider comprises a fifth flip-flop having a data input and an inverted output, the data input connected to the inverted output.

In some examples, the supply voltage glitch detection circuit comprises an inverter connected between the clock input of the third clock signal divider and a clock signal line, wherein the clock input of the fourth clock signal divider is connected to the clock signal line. In some alternative examples, the supply voltage glitch detection circuit comprises an inverter connected between the clock input of the fourth clock signal divider and a clock signal line, wherein the clock input of the third clock signal divider is connected to the clock signal line.

The output of the first clock signal divider may be connected directly to the input of the delay circuit. The supply voltage glitch detection circuit may alternatively further comprise a logic AND gate having a first input connected to the output of the second flip-flop, a second input connected to the inverted output and data input of the third flip-flop and an output connected to the input of the delay circuit.

According to a second aspect there is provided a method of detecting a supply voltage glitch using a detector circuit comprising: a first flip-flop having a data input, a clock input and an output for providing a glitch detection signal; a delay circuit having an input and an output connected to the data input of the first flip-flop; a first clock signal divider having a clock input connected to receive an inverted clock signal and an output connected to the input of the delay circuit; a second clock signal divider having a clock input connected to receive the clock signal and an output connected to the clock input of the first flip-flop, wherein the delay circuit provides a delay of at least half a clock period of a clock signal with a supply voltage of the circuit at a nominal level and, when an increase in the supply voltage causes the delay to fall below half the clock period, the glitch detection signal changes state.

The delay provided by the delay circuit may be at least half of a period of the clock signal.

The first and second clock signal dividers may provide a divided clock signal at a respective output having a period of twice the clock signal provided at the respective clock inputs.

The delay provided by the delay circuit may be up to 1.5, 2 or 4 times the period of the clock signal.

In some examples, the first clock signal divider comprises a second flip-flop having a data input and an inverted output, the data input connected to the inverted output, and the second clock signal divider comprises a third flip-flop having a data input and an inverted output, the data input connected to the inverted output.

These and other aspects of the invention will be apparent from, and elucidated with reference to, the embodiments described hereinafter.

### Brief description of Drawings

Embodiments will be described, by way of example only, with reference to the drawings, in which:
Figure 1a is an example voltage glitch detection circuit;
Figure 1b is a timing diagram of example signals in the circuit of Figure 1a;
Figure 2 is a further timing diagram of example signals in the circuit of Figure 1a, indicating best and worst case scenarios for data signals in the circuit;
Figure 3a is a further example voltage glitch detection circuit;
Figure 3b is a timing diagram of example signals in the circuit of Figure 3a;
Figure 4a is a further example voltage glitch detection circuit;
Figure 4b is a timing diagram of example signals in the circuit of Figure 4a; and
Figure 5 is a further example voltage glitch detection circuit.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar feature in modified and different embodiments.

### Detailed description of embodiments

US 11,321,457 B2 discloses a digital glitch detection system in which a detector with a combination of an initial delay and a capture section provides a digital output value corresponding to a measured variation from a nominal voltage. The initial delay is provided by a combination of delay circuits that is preset to provide a delay according to any process variations in the circuit. The capture section comprises a series of fixed delays and capture latches that together output a digital signal indicating a variation from an initial nominal delay value, with a higher value indicating a higher than normal voltage and a lower value indicating a lower than normal voltage. Voltage glitches can be effectively detected using such a detector but, for correct operation, the initial delay needs to be adjustable to cover all possible process and temperature variations, requiring trimming or fuse operations on the initial delay. Also, the multiple bit output of the detector requires additional decoding functions, increasing the overall area requirements for the detector. This may limit the application of such a detector to where only one or a small number of detectors are required. For detection of electromagnetic fault injections, a wider coverage across a circuit may be required, for which multiple such detectors are less suitable due to the additional area required.

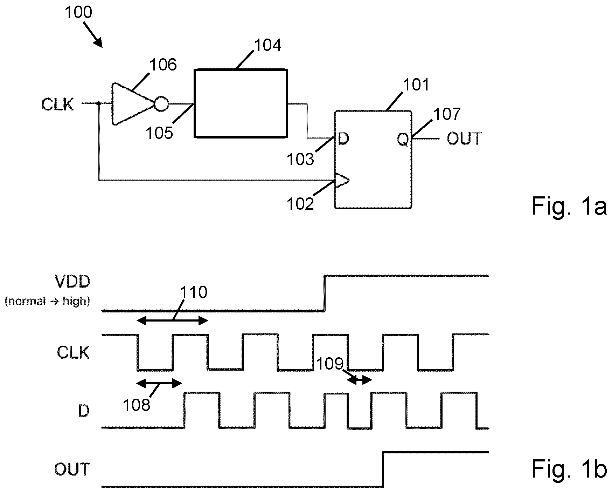

An alternative approach, as set out herein, is to instead provide a simplified detector that uses only certain essential elements for detecting a variation in a supply voltage. Figure 1a illustrates an example glitch detector 100 and Figure 1b an example timing diagram for the circuit. The detector 100 comprises a D-type flip-flop 101 having a clock input 102 connected to a clock signal CLK and a data input 103 connected to an output of a delay circuit 104. An input 105 of the delay circuit 104 is connected to the clock input 102 via an inverter 106. An output 107 of the flip-flop 101 provides an output signal OUT that represents, in this case, whether a supply voltage VDD is in a normal range or is higher than normal.

As illustrated in Figure 1b, during normal operation while VDD is at a normal level, the clock signal CLK is followed by the delayed clock signal D input to the data input 103, with the delayed clock signal having a constant delay 108 defined by the delay circuit 104. Upon a voltage glitch occurring that increases VDD to a higher than normal level, this results in a reduced delay 109 due to the increased voltage causing the delay circuit 104 to pass the inverted clock signals through to the data input 103 more quickly. When this reduced delay 109 is less than half the clock period 110, the output OUT changes state, in this case changing state from low to high.

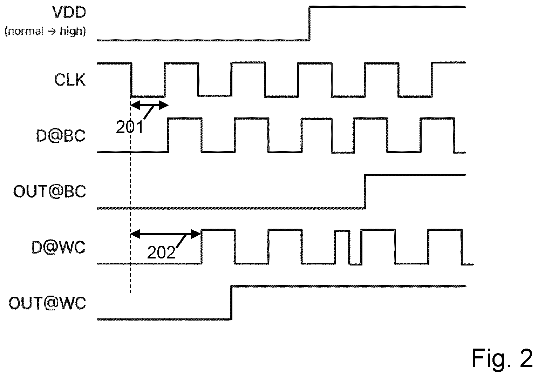

Under all process and temperature conditions, the normal delay 108 should be between 0.5 and 1 clock period while VDD remains within a normal range. In this case, the operational delay range can be defined as half of the clock period. This delay amount should be within this defined range for all process and temperature variations, otherwise this can result in a false positive in some process corners. Figure 2 illustrates a timing diagram for the circuit in Figure 1a indicating an example false configuration. In a 'best case' scenario the delay 201 for the data input signal D@BC is slightly longer than half the clock period, and therefore operates to result in the same behaviour as in Figure 1b, in which the output OUT@BC changes state following a rise in VDD from normal to high. However, in a 'worst case' scenario the delay 202 for the data input signal D@WC is over one clock period and is not operatable because the output OUT@WC rises before a rise in VDD. As a result, if the difference between the delay in the best and worst case scenarios for the circuit exceeds the operational delay range, in this case half of the clock period, it is not possible to find a configuration point for all process corners.

Using a slower clock can widen the operational delay range. However, the minimum required delay is thereby also increased and results in increasing the variation between the best and worst case scenarios by the same ratio.

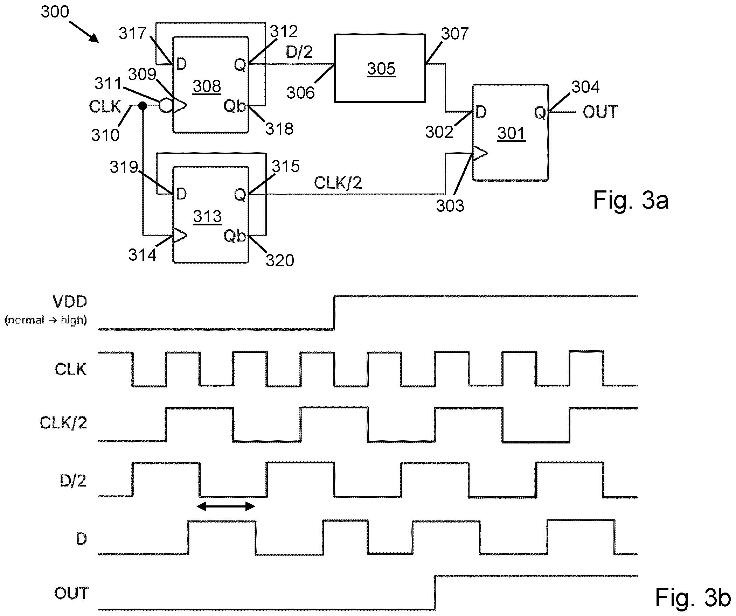

Figure 3a illustrates an example supply voltage glitch detection circuit 300 that provides a solution to the above problem by extending the operational delay range with the same minimum required delay amount through the use of a pair of clock dividers 308, 313. Figure 3b illustrates a timing diagram illustrating the various signals in the circuit 300. The circuit 300 comprises a first flip-flop 301 having a data input 302, a clock input 303 and an output 304 for providing a glitch detection signal OUT. A delay circuit 305 has an input 306 and output 307, the output 307 being connected to the data input 302 of the first flip-flop 301. First and second clock signal dividers 308, 313 provide divided clock signals D/2, CLK/2 to the delay circuit 305 and clock input 303 of the first flip-flop 301 respectively. The first and second clock signal dividers 308, 313 in this example comprise second and third flip-flops 308, 313, although other arrangements may be possible in alternative examples. In this example, each of the second and third flip-flops 308, 313 have a data input 317, 319 connected to an inverted output 318, 320 to cause the flip-flops 308, 313 to operate as clock dividers.

The second clock signal divider 313 is connected to receive a clock signal CLK and the first clock signal divider 308 is connected to receive an inverted version of the clock signal CLK. In this example, an inverter 311 is connected between a clock input 309 of the first clock signal divider 308 and a clock signal line 310 and a clock input 314 of the second clock signal divider 313 is connected directly to the clock signal line 310. In alternative examples, the same effect may be achieved with an inverter instead being provided between the clock signal line 310 and the clock input 314 of the second clock signal divider 313, with the clock input 309 of the first clock signal divider 308 connected directly to the clock signal line 310. An output 312 of the first clock signal divider 308 is connected to the input 306 of the delay circuit 305, in this example by way of a direct connection between the output 312 of the first clock signal divider 308 and the input 306 of the delay circuit 305. An output 315 of the second clock signal divider 313 is connected to the clock input 303 of the first flip-flop 301.

The clock signal dividers 308, 313 operate to make the clock inputs to the delay circuit 305 and first flip-flop 301 slower. Because the clock signal dividers 308, 313 use inverted edges the outputs D/2, CLK/2 have the same period, which is double the period of the original clock signal CLK, and the phase difference is half the period of the original clock signal CLK. The circuit 300 in this case is consequently operable when the delay is between 0.5 and 1.5 clock period, making the operational delay range one clock period, i.e. double that of the circuit in Figure 1a, allowing for a wider range of process and temperature variations.

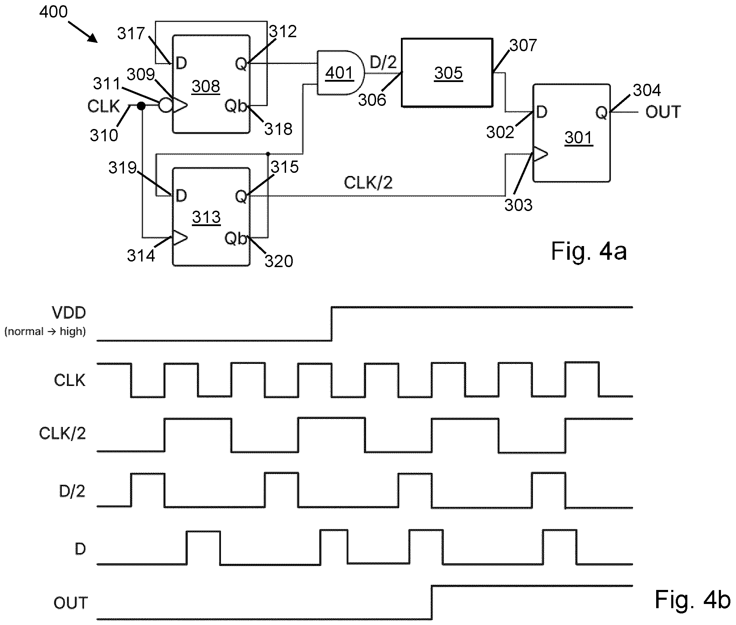

Figure 4a illustrates an alternative design for a glitch detection circuit that provides for an extra configuration margin compared to that of the circuit 300 in Figure 3a. The components of the circuit 400 are the same as those of the circuit 300 in Figure 3a with the addition of a logic AND gate 401 connected between the first and second clock signal dividers 308, 313 and the input 306 of the delay circuit 305. In this example, the first and second clock signal dividers 308, 313 are required to be flip-flops through the use of the inverted output 320 of the third flip-flop 313. The logic AND gate 401 has a first input connected to the output 312 of the second flip-flop 308 and a second input connected to the inverted output 320 and the data input 319 of the third flip-flop 313. An output of the logic AND gate 401 is connected to the input 306 of the delay circuit 305.

The logic AND gate 401 results in a half clock cycle of D/2 width, as shown in the timing diagram in Figure 4b, which creates an extra margin of a half clock period. The operation delay range in this case is now from 0.5 to 2 clock periods, i.e. covering 1.5 times the clock period. Because this design has three times the operational delay range of the original simplified detector in Figure 1a, the circuit 400 is more configurable.

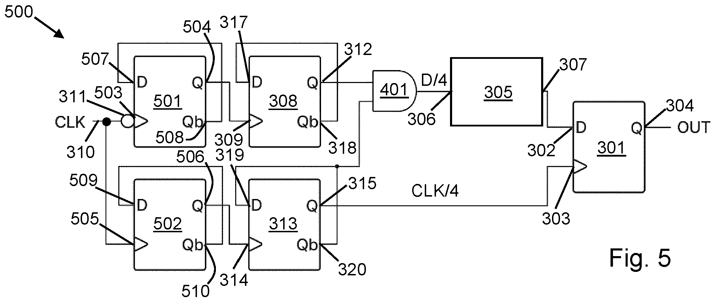

If an additional delay margin is required, additional clock signal dividers may be added. Figure 5 illustrates a further alternative supply voltage glitch detection circuit 500 in which two additional clock signal dividers 501, 502 are provided, which extends the operational delay range from 0.5 to 4 clock periods, i.e. resulting in an operational delay range of 3.5 clock signal periods. The circuit 500 comprises all the components of the circuit 300 described above, with the addition of the optional logic AND gate 401 of circuit 400 and two further clock signal dividers 501, 502. In this example, the inverted clock signal received at the clock input of the first clock signal divider 308 is provided by a third clock signal divider 501 and the clock signal received at the clock input of the second clock signal divider 313 is provided by a fourth clock signal divider 502.

The third clock signal divider 501 has a clock input 503 connected to receive an inverted clock signal and an output 504 connected to the clock input 309 of the first clock signal divider 308 for providing an inverted divided clock signal to the first clock signal divider 308. The first clock signal divider 308 then further divides the divided inverted clock signal, resulting in an output signal at the output 312 of the first clock signal divider that has four times the period of the clock signal CLK. The fourth clock signal divider 502 has a clock input 505 connected to receive the clock signal CLK and an output 506 connected to the clock input 314 of the second clock signal divider 313 for providing a divided clock signal to the second clock signal divider 313. The second clock signal divider 313 then further divides the divided clock signal, resulting in an output signal at the output 315 of the second clock signal divider that also has four times the period of the clock signal CLK.

As with the circuits 300, 400 described above, the third and fourth clock signal dividers may comprise fourth and fifth flip-flops 501, 502 respectively, with a data input 507, 509 connected to a respective inverted output 508, 510 in each of the fourth and fifth flip-flops 501, 502. Operation of the circuit 500 of Figure 5 is similar to that described above for the circuit 400 of Figure 4a, with the divided clock signal in this case being CLK/4 and the inverted divided clock signal provided to the delay circuit 305 being D/4, further extending the operational delay range, or margin width, of the circuit 500.

Table 1 below provides a summary of the above-described detector designs, indicating the minimum and maximum delays for operation, the margin width (i.e. the difference between the minimum and maximum delays) and the sample rate for operation, all in terms of the clock period.

An advantage of the glitch detector circuits described herein is that trimming of the delay circuit 305 is not required due to the wider operational delay margin. A further advantage is that, due to the small area required for the circuit, the burden of using many such detectors throughout a secure circuit is reduced, making the detectors more suitable for electromagnetic fault detection. A data-sampling integrity check is thereby enabled by sampling using flip-flops with a relative delay.

**Table 1 - Summary of detector designs and operational parameters.**

| Detector design | Figure 1a | Figure 3a | Figure 4a | Figure 5 |
|---|---|---|---|---|
| Minimum delay for operation (tCLK) | 0.5 | 0.5 | 0.5 | 0.5 |
| Maximum delay for operation (tCLK) | 1 | 1.5 | 2 | 4 |
| Margin width (tCLK) | 0.5 | 1 | 1.5 | 3.5 |
| Sample rate (tCLK) | 1 | 2 | 2 | 4 |

Unlike the circuit disclosed in US 11,321,457 B2, which also uses flip-flops and a delay with a common clock phase, the circuits disclosed herein use opposite clock edges. The minimum operation delay can also be configured without the need for slowing the clock signal.

From reading the present disclosure, other variations and modifications will be apparent to the skilled person. Such variations and modifications may involve equivalent and other features which are already known in the art of glitch detectors, and which may be used instead of, or in addition to, features already described herein.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. A supply voltage glitch detection circuit (300, 400, 500) comprising:
a first flip-flop (301) having a data input (302), a clock input (303) and an output (304) for providing a glitch detection signal (OUT);
a delay circuit (305) having an input (306) and an output (307) connected to the data input (302) of the first flip-flop (301);
a first clock signal divider (308) having a clock input (309) connected to receive an inverted clock signal and an output (312) connected to the input (306) of the delay circuit (305);
a second clock signal divider (313) having a clock input (314) connected to receive the clock signal (CLK) and an output (315) connected to the clock input (303) of the first flip-flop (301),
wherein the supply voltage glitch detection circuit (300, 400, 500) is configured to cause the glitch detection signal (OUT) to change state upon a supply voltage of the circuit (300, 400, 500) deviating to cause a change in a delay provided by the delay circuit (305).

2. The supply voltage glitch detection circuit (300, 400, 500) of claim 1, wherein:
the first clock signal divider comprises a second flip-flop (308) having a data input (317) and an inverted output (318), the data input (317) connected to the inverted output (318); and
the second clock signal divider comprises a third flip-flop (313) having a data input (319) and an inverted output (320), the data input (319) connected to the inverted output (320).

3. The supply voltage glitch detection circuit (300) of claim 1 or claim 2, comprising an inverter (311) connected between the clock input (309) of the first clock signal divider (308) and a clock signal line (310), wherein the clock input (314) of the second clock signal divider (313) is connected to the clock signal line (310).

4. The supply voltage glitch detection circuit of any one of claims 1 to 3, wherein the output (312) of the first clock signal divider (308) is connected directly to the input (306) of the delay circuit (305).

5. The supply voltage glitch detection circuit (400, 500) of claim 2 or claim 3, further comprising a logic AND gate (401) having a first input connected to the output (312) of the second flip-flop (308), a second input connected to the inverted output (320) and data input (319) of the third flip-flop (313) and an output connected to the input (306) of the delay circuit (305).

6. The supply voltage glitch detector circuit (500) of claim 1, wherein the clock signal is a divided clock signal, the detector circuit (500) further comprising:
a third clock signal divider (501) having a clock input (503) connected to receive an inverted clock signal and an output (504) connected to the clock input (309) of the first clock signal divider (308) for providing the inverted divided clock signal to the first clock signal divider (308); and
a fourth clock signal divider (502) having a clock input (505) connected to receive the clock signal and an output (506) connected to the clock input (309) of the second clock signal divider (313) for providing the divided clock signal to the second clock signal divider (313).

7. The supply voltage glitch detector circuit (500) of claim 6, wherein:
the third clock signal divider comprises a fourth flip-flop (501) having a data input (507) and an inverted output (508), the data input (507) connected to the inverted output (508); and
the fourth clock signal divider comprises a fifth flip-flop (502) having a data input (509) and an inverted output (510), the data input (509) connected to the inverted output (510).

8. The supply voltage glitch detection circuit (500) of claim 6 or claim 7, comprising an inverter (311) connected between the clock input (503) of the third clock signal divider (501) and a clock signal line (310), wherein the clock input (505) of the fourth clock signal divider (502) is connected to the clock signal line (310).

9. The supply voltage glitch detection circuit of any one of claims 6 to 8, wherein the output (312) of the first clock signal divider (308) is connected directly to the input (306) of the delay circuit (305).

10. The supply voltage glitch detection circuit (400, 500) of claim 7 or claim 8, further comprising a logic AND gate (401) having a first input connected to the output (312) of the second flip-flop (308), a second input connected to the inverted output (320) and data input (319) of the third flip-flop (313) and an output connected to the input (306) of the delay circuit (305).

11. A method of detecting a supply voltage glitch using a detector circuit (300, 400, 500) comprising:
a first flip-flop (301) having a data input (302), a clock input (303) and an output (304) for providing a glitch detection signal (OUT);
a delay circuit (305) having an input (306) and an output (307) connected to the data input (302) of the first flip-flop (301);
a first clock signal divider (308) having a clock input (309) connected to receive an inverted clock signal and an output (312) connected to the input (306) of the delay circuit (305);
a second clock signal divider (313) having a clock input (314) connected to receive the clock signal and an output (315) connected to the clock input (303) of the first flip-flop (301),
wherein the delay circuit (305) provides a delay of at least half a clock period of a clock signal with a supply voltage of the circuit at a nominal level and, when an increase in the supply voltage causes the delay to fall below half the clock period, the glitch detection signal (OUT) changes state.

12. The method of claim 11, wherein the delay provided by the delay circuit (305) is at least half of a period of the clock signal (CLK).

13. The method of claim 11 or claim 12, wherein the first and second clock signal dividers (308, 313) provide a divided clock signal at a respective output (312, 315) having a period of twice the clock signal (CLK) provided at the respective clock inputs (309, 314).

14. The method of any one of claims 11 to 13, wherein the delay provided by the delay circuit (305) is up to 1.5, 2 or 4 times the period of the clock signal (CLK).

15. The method of any one of claims 11 to 14, wherein:
the first clock signal divider comprises a second flip-flop (308) having a data input (317) and an inverted output (318), the data input (317) connected to the inverted output (318); and
the second clock signal divider comprises a third flip-flop (313) having a data input (319) and an inverted output (320), the data input (319) connected to the inverted output (320).
